# EUROPEAN PATENT SPECIFICATION

(11) **EP 2 136 112 B1**
(45) Date of publication and mention of the grant of the patent: **12.10.2011**
(21) Application number: 08721726.1
(22) Date of filing: 10.03.2008
(51) Int. Cl.: F16H 61/20, F16H 59/54, F16H 59/66, F16H 59/72, F16H 61/686

(54) **CONTROLLER FOR AUTOMATIC TRANSMISSION**
STEUERUNG FÜR AUTOMATIKGETRIEBE
DISPOSITIF DE COMMANDE POUR TRANSMISSION AUTOMATIQUE

(30) Priority: 25.09.2007 JP 2007248078
(43) Date of publication of application: 23.12.2009
(73) Proprietor: Aisin AW Co., Ltd., Fuji-cho Anjo-shi Aichi 444-1192 (JP)
(72) Inventor: OKUMOTO, Gen, Anjo-shi Aichi 444-1192 (JP); TOMIDA, Hideki, Anjo-shi Aichi 444-1192 (JP); OKADO, Ryuji, Anjo-shi Aichi 444-1192 (JP); TSUTSUI, Hiroshi, Anjo-shi Aichi 444-1192 (JP)
(74) Representative: Intès, Didier Gérard André
(86) International application number: PCT/JP2008/054310
(87) International publication number: WO 2009/041084

(56) References cited:
- JP-A- 5 087 236
- JP-A- 8 303 571
- JP-A- 9 264 419
- JP-A- 59 019 764
- JP-A- 2002 372 142
- JP-A- 2007 205 452
- JP-U- 61 101 141
- US-A- 4 644 826
- US-A- 5 769 753
- US-A1- 2005 064 988

## Description

### TECHNICAL FIELD

The present invention relates to an automatic transmission control device that is installed in a vehicle or the like, and specifically to an automatic transmission control device that carries out neutral control that, when the vehicle is stopped in the drive range, reduces hydraulic pressure in a first clutch that is engaged when the vehicle starts moving forward, and thereby reduces the transmitted torque.

### BACKGROUND ART

In recent years, in order to improve the fuel economy of a vehicle and reduce idling vibration, devices have been proposed that carry out what is called neutral control that, when the vehicle is in a state of having been forcibly stopped by a foot brake in the drive range, reduces hydraulic pressure in an input clutch (for example, a clutch C-1) that is engaged when the vehicle starts moving forward, causing the clutch to slip and reducing the transmitted torque, such that a roughly neutral state is implemented. (Refer to Japanese Patent Application Publication No. JP-A-2001-165307, in the following Patent Document 1, for example.)

Further, if the neutral control is carried out in this manner with the vehicle in a stopped state, creep force is not transmitted to a driving wheel, so when the vehicle is stopped on a sloping road, for example, the vehicle is likely to move backward, in spite of the shift position being in the Drive (D) range. For that reason, in a device like that disclosed in Patent Document 1, what is called hill hold is carried out, in which a second-speed brake (a brake band for the second to fourth speeds) is engaged when the neutral control is in effect, working in coordination with a first-speed one-way clutch to prevent the driving wheel from turning in reverse, thus preventing the vehicle from unintentionally moving backward when the neutral control is in effect.

### DISCLOSURE OF THE INVENTION

Howevcr, the engaging of the second-speed brake to carry out the hill hold, as in Patent Document 1, creates a problem in that it causes the rotating parts in the speed change mechanism to become fixed in relation to the transmission case, such that the idling vibration of the engine is transmitted to the transmission case through the speed change mechanism and the brake, which interferes with reducing the vehicle vibration while the vehicle is stopped.

Furthermore, even though the input clutch is made to slip such that a state close to neutral is implemented when the neutral control is in effect (when in-neutral control is in effect), if the input clutch is released completely, then when the neutral control ends, the engaging of the input clutch will be delayed in relation to the driver's operation of the accelerator, such that engagement shock is likely to occur. The input clutch must therefore be kept in a state of slight engagement. This creates a problem in that, when the second-speed brake is engaged as described above, the speed change mechanism enters a state of being in the second speed, a comparatively low speed, such that the idling vibration of the engine is transmitted to the driving wheel in a form in which the torque is significantly amplified by the gear ratio. This also interferes with reducing the vehicle vibration while the vehicle is stopped.

Accordingly, the present invention provides an automatic transmission control device that is capable of reducing vehicle vibration that is caused by engine idling vibration when the neutral control is in effect.

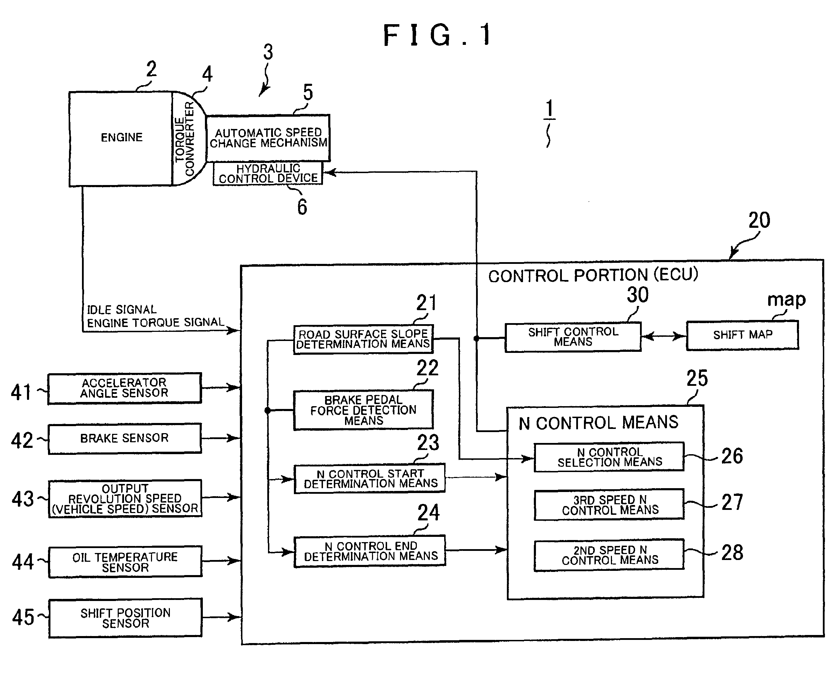

The present invention (refer, for example, to FIGS. 1 to 8) is an automatic transmission control device (1) for an automatic transmission (3). The automatic transmission includes a plurality of friction engagement elements (for example, C-1, C-2, C-3, B-1, B-2, and F-1) that includes at least a first clutch (C-1) that is engaged when forward movement starts, a brake (B-1) that is engaged in addition to the first clutch (C-1) in a low speed (for example, a second speed), and a second clutch (C-3) that is engaged in addition to the first clutch (C-1) in an intermediate speed (for example, a third speed) that has a higher gear ratio than the low speed. The automatic transmission also includes a speed change mechanism (5) that implements a plurality of speeds (for example, six forward speeds and one reverse speed) by forming a transmission path between an input member (10) and an output member (11), based on an engagement state of the plurality of friction engagement elements. The automatic transmission also includes a hydraulic control device (6) that performs pressure regulation of a hydraulic pressure that is supplied to a hydraulic servo for each of the plurality of friction engagement elements. The automatic transmission control device includes neutral control means (25) for executing a neutral control that, when a vehicle is stopped with the automatic transmission in a drive range (for example, a D range), causes the hydraulic control device (6) to decrease a hydraulic pressure (PC1) of the first clutch (C-1), putting the first clutch (C-1) into a slipping state, and decreases torque that is transmitted between the input member (10) and the output member (11). The neutral control means (25) includes intermediate speed neutral control means (27) for, during execution of the neutral control, increasing a hydraulic pressure (PC3) of the second clutch (C-3), engaging the second clutch and putting the automatic transmission into the intermediate speed.

Thus, when the vehicle is stopped with the transmission in the drive range, the hydraulic pressure is decreased for the first clutch that is engaged by the hydraulic control device when the vehicle starts to move forward. This starts the neutral control that puts the first clutch into the slipping state and decreases the torque that is transmitted between the input member and the output member. The intermediate speed neutral control means increases the hydraulic pressure of the second clutch to engage the second clutch and put the transmission into the intermediate speed. Therefore, while the neutral control is in effect, the rotating parts of the speed change mechanism are not made stationary in relation to the transmission case, making it possible to prevent the idle vibration of the engine from being transmitted to the transmission case through the speed change mechanism and making it possible to reduce the vehicle vibration. Moreover, because the speed change mechanism is in the intermediate speed state, in which the gear ratio is higher than in the low speed, it is possible to mitigate the extent to which the idle vibration is amplified according to the gear ratio and transmitted to the driving wheel, making it possible to reduce the vehicle vibration while the neutral control is in effect.

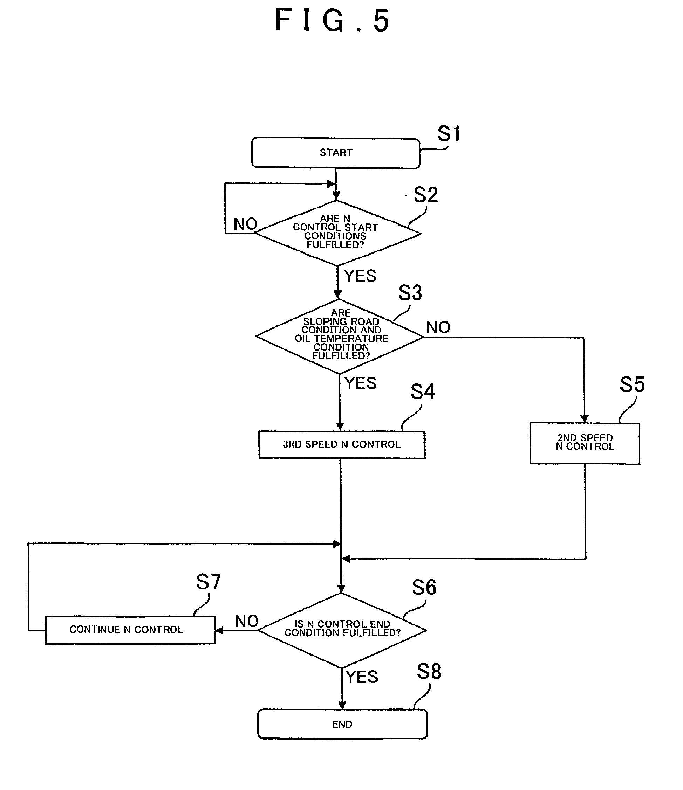

A preferred embodiment (for example, FIGS. 1 and 5) is characterized by further including road surface slope determination means (21) for determining a road surface slope. The intermediate speed neutral control means (27) puts the automatic transmission into the intermediate speed (for example, the third speed) when the road surface slope is less than a specified slope.

Thus, because the intermediate speed neutral control means puts the automatic transmission into the intermediate speed when the road surface slope is less than the specified slope, the intermediate speed neutral control, which does not implement the hill hold state, is executed only when the road surface slope is less than the specified slope. This makes it possible to prevent the vehicle from moving backward when the driver does not intend to move backward while the neutral control is in effect.

Preferably (for example, FIGS. 1, 5, and 8), the neutral control means (25) includes low speed neutral control means (28) for, during execution of the neutral control, increasing a hydraulic pressure (PB1) of the brake (B-1), engaging the brake, putting the automatic transmission into the low speed (for example, the second speed), and implementing a hill hold state. The low speed neutral control means (28) puts the automatic transmission into the low speed (for example, the second speed) and implements the hill hold state when the road surface slope is equal to or more than the specified slope.

Thus, because the low speed neutral control means implements the hill hold state in the low speed when the road surface slope is equal to or more than the specified slope, the hill hold state is implemented when the road surface slope is equal to or more than the specified slope, making it possible to prevent the vehicle from moving backward when the driver does not intend to move backward while the neutral control is in effect.

A preferred embodiment (refer, for example, to FIGS. 1 and 5) is characterized by further including oil temperature detection means (44) for detecting an oil temperature within the automatic transmission (3). The road surface slope determination means (21) suspends the determination of the road surface slope when it determines that the oil temperature that is detected by the oil temperature detection means (44) is a low oil temperature. The low speed neutral control means (28) puts the automatic transmission into the low speed (for example, the second speed) and implements the hill hold state when the determination of the road surface slope is suspended.

Thus, in a case where the road surface slope determination means has determined that the oil temperature that is detected by the oil temperature detection means is a low oil temperature, the determination of the road surface slope is suspended. When the determination of the road surface slope is suspended, the low speed neutral control means puts the transmission into the low speed and implements the hill hold state. It is therefore possible to prevent an erroneous determination of the slope, caused by the high viscosity of the oil and the large rotational resistance of the speed change mechanism at the low oil temperature. This in turn makes it possible to prevent an erroneous determination from causing the vehicle to move backward when the driver does not intend to move backward while the neutral control is in effect.

A preferred embodiment (refer, for example, to FIG. 1) is characterized in that the road surface slope determination means (21) computes a running resistance based on an engine output and a rotational state of the output member (11) and determines the road surface slope based on the running resistance.

This makes it possible for the road surface slope determination means to compute the running resistance based on the engine output and the rotational state of the output member and to determine the road surface slope based on the running resistance.

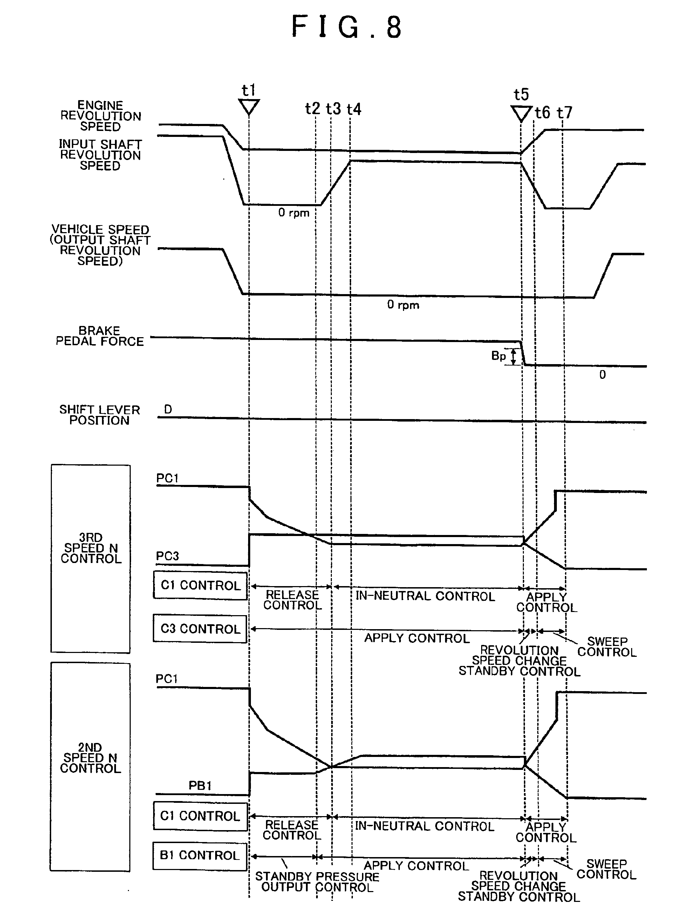

A preferred embodiment (refer, for example, to FIGS. 1 and 8) is characterized by further including brake pedal force detection means (22, 42) for detecting a foot brake pedal force. This embodiment also includes neutral control start determination means (23) for, when it determines that the automatic transmission is in the drive range, that the foot brake pedal force is equal to or more than a specified value (Bp), and that the vehicle is in a stopped state, determining that the execution of the neutral control will be started by the neutral control means (25). This embodiment also includes neutral control end determination means (24) for, when it determines that the automatic transmission is in the drive range and that the foot brake pedal force has become less than the specified value (Bp), determining that the execution of the neutral control will be ended by the neutral control means (25).

Thus, when the neutral control start determination means has determined that the transmission is in the drive range, that the foot brake pedal force is equal to or more than the specified value, and that the vehicle is in the stopped state, the neutral control start determination means determines that the execution of the neutral control will be started by the neutral control means. When the neutral control end determination means has determined that the foot brake pedal force has become less than the specified value, the neutral control end determination means determines that the execution of the neutral control will be ended by the neutral control means. It is therefore possible for the driver's intention to stop the vehicle to be reliably determined and for the neutral control to be executed, without the driver performing any deceleration control, for example, while the vehicle is being moved forward by the creep force.

Further a preferred embodiment (refer, for example, to FIG. 1) is characterized in that the specified value (Bp) is modified based on the road surface slope that is determined by the road surface slope determination means (21).

Thus, the specified value for the foot brake pedal force is modified based on the road surface slope that is determined by the road surface slope determination means, so the start and end timings for the neutral control can be varied according to the road surface slope. In particular, ending the neutral control sooner as the road surface slope becomes steeper makes it possible to start transmitting the torque to the driving wheel sooner, making it possible to prevent the vehicle from moving backward when the driver does not intend to move backward.

Furthermore, a preferred embodiment (refer, for example, to FIG. 8) is characterized in that the intermediate speed neutral control means (27), when it increases the hydraulic pressure (PC3) of the second clutch (C-3) and engages the second clutch, immediately increases the hydraulic pressure of the second clutch to more than an engagement pressure.

Thus, for example, if the second clutch is engaged while the release of the first clutch (in-neutral control) from a lowest speed state is in progress, the shift is made from the lowest speed to the intermediate speed while the first clutch is being released. This changes the portion of the torque that is allocated to the first clutch and changes the state of engagement of the first clutch, making it likely that a torque fluctuation shock will occur. However, when the hydraulic pressure of the second clutch is increased and the second clutch is engaged, the intermediate speed neutral control means immediately increases the hydraulic pressure to more than the engagement pressure. It is therefore possible to execute release control that releases the first clutch from the state of being shifted into the intermediate speed, making it possible to prevent the torque fluctuation shock from occurring.

Note that the reference numerals in parentheses above are for the purpose of comparison to the drawings, but they are merely expedients to facilitate understanding of the present invention and do not limit the claims in any way whatsoever.

### BRIEF DESCRIPTION OF THE DRAWINGS

[FIG. 1] FIG. 1 is a block diagram that shows an automatic transmission control device according to an embodiment of the present invention.
[FIG. 2] FIG. 2 is a schematic diagram of a speed change mechanism that can use the present invention.
[FIG. 3] FIG. 3 is an engagement table for the speed change mechanism.
[FIG. 4] FIG. 4 is a speed diagram for the speed change mechanism.
[FIG. 5] FIG. 5 is a flowchart that shows a neutral control according to the present embodiment.
[FIG. 6] FIG. 6 is a flowchart that shows a clutch C-1 control in a third speed neutral control.
[FIG. 7] FIG. 7 is a flowchart that shows a clutch C-3 control in the third speed neutral control.
FIG. 8 is a timing chart that shows the neutral control according to the present embodiment.

### BEST MODES FOR CARRYING OUT THE INVENTION

An embodiment of the present invention will be explained below with reference to FIGS. 1 to 8.

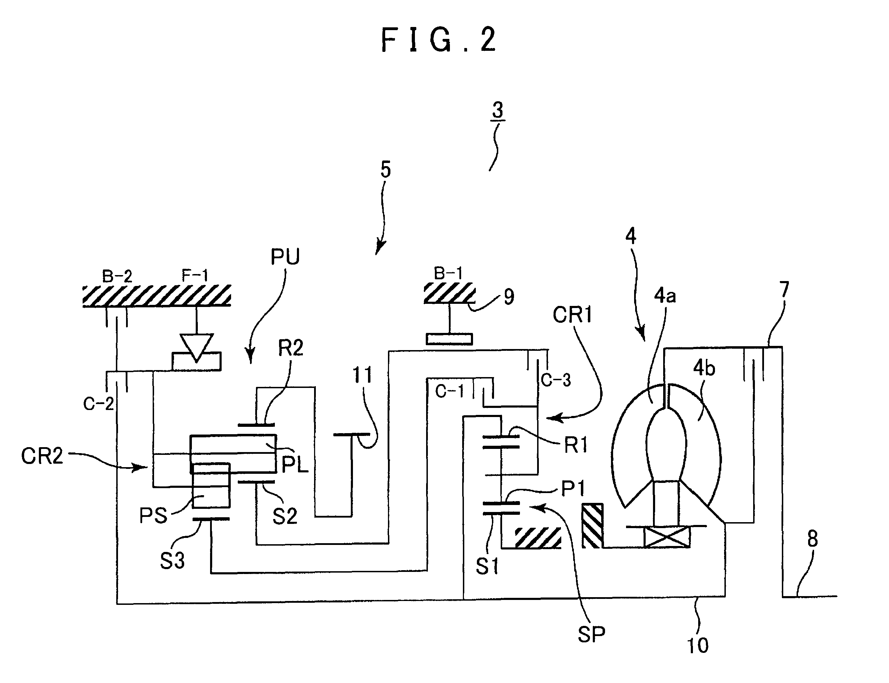

First, an overall configuration of an automatic transmission 3 that can use the present invention will be explained below with reference to FIG. 2. As shown in FIG. 2, the automatic transmission 3 that is preferred when used in a front engine, front-wheel drive (FF) type of vehicle, for example, has an automatic transmission input shaft 8 that is connected to an engine 2 (refer to FIG. 1), a torque converter 4 that is centered around the axis of the input shaft 8, and an automatic speed change mechanism (a speed change mechanism) 5.

The torque converter 4 has a pump impeller 4a that is connected to the input shaft 8 of the automatic transmission 3 and a turbine runner 4b to which rotation of the pump impeller 4a is transmitted through a working fluid. The turbine runner 4b is connected to an input shaft (an input member) 10 of the automatic speed change mechanism 5, the input shaft 10 being disposed on the same axis as the input shaft 8. The torque converter 4 is also provided with a lock-up clutch 7. If the lock-up clutch 7 is engaged by hydraulic control of a hydraulic control device 6 (refer to FIG. 1), rotation of the input shaft 8 of the automatic transmission 3 is transmitted directly to the input shaft 10 of the automatic speed change mechanism 5.

The automatic speed change mechanism 5 is provided with a planetary gear SP and a planetary gear unit PU on the input shaft 10. The planetary gear SP is provided with a sun gear S1, a carrier CR1, and a ring gear R1. The carrier CR1 has a pinion P1 that meshes with the sun gear S1 and the ring gear R1, making the planetary gear SP a single pinion planetary gear.

Further, the planetary gear unit PU has, as four rotating elements, a sun gear S2, a sun gear S3, a carrier CR2, and a ring gear R2. The carrier CR2 has a long pinion PL that meshes with the sun gear S2 and the ring gear R2, as well as a short pinion PS that meshes with the sun gear S3, the long pinion PL and the short pinion PS meshing with one another to make the planetary gear unit PU a Ravigneaux type planetary gear.

The sun gear S1 of the planetary gear SP is connected to a boss portion, not shown in the drawing, that is fixed to an integral part of a transmission case, not shown in the drawing, such that rotation of the sun gear S1 is fixed. Further, rotation of the ring gear R1 is the same as rotation of the input shaft 10 (hereinafter called the "input rotation"). In addition, the ring gear R1, which does the input rotation with the fixed sun gear S1, causes the carrier CR1 to do deceleration rotation that decelerates the input rotation. The carrier CR1 is also connected to a (first) clutch C-1 and to a (second) clutch C-3.

The sun gear S2 of the planetary gear unit PU is connected to a brake B-1, which is a hand brake, and is stationary in relation to the transmission case. The sun gear S2 is also connected to the clutch C-3, and the deceleration rotation of the carrier CR1 is input to the sun gear S2 through the clutch C-3. The sun gear S3 is connected to the clutch C-1, and the deceleration rotation of the carrier CR1 is input to the sun gear S3.

The carrier CR2 is connected to a clutch C-2 to which the rotation of the input shaft 10 is input, and the input rotation is input to the carrier CR2 through the clutch C-2. The carrier CR2 is also connected to a one-way clutch F-1 and to a brake B-2. Rotation that is input through the one-way clutch F-1 is restricted to rotation in one direction in relation to the transmission case. Rotation that is input through the brake B-2 is stationary. The ring gear R2 is connected to a counter gear (an output member) 11. The counter gear 11 is connected to a driving wheel through a countershaft and a differential unit that are not shown in the drawing.

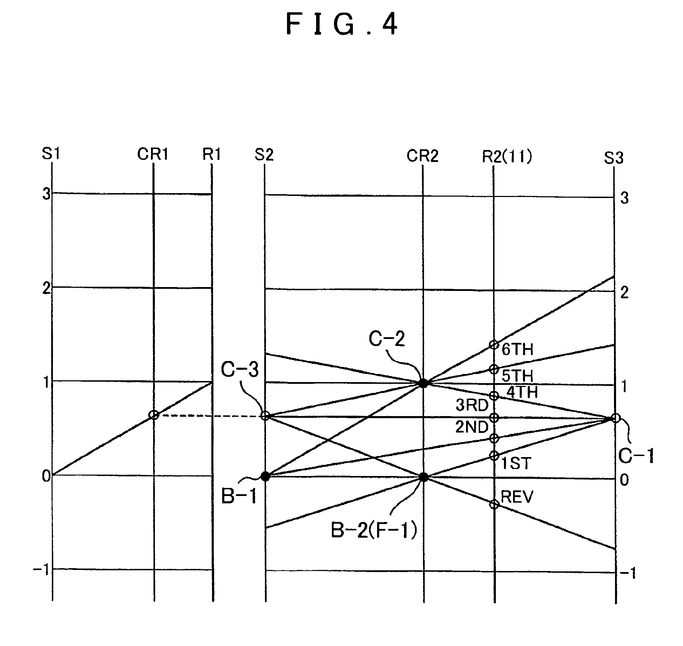

Next, the operation of the automatic speed change mechanism 5 will be explained based on the configuration described above, with reference to FIGS. 2, 3, and 4. Note that in the speed diagram shown in FIG. 4, the vertical axes indicate revolution speeds for the individual rotating elements (the individual gears), and the horizontal axes correspond to the gear ratios of the individual rotating elements. Further, in the portion of the speed diagram for the planetary gear SP, the vertical axes correspond to the sun gear S1, the carrier CR1, and the ring gear R1, in order from the left side of FIG. 4. In the portion of the speed diagram for the planetary gear unit PU, the vertical axes correspond to the sun gear S3, the ring gear R2, the carrier CR2, and the sun gear S2, in order from the right side of FIG. 4.

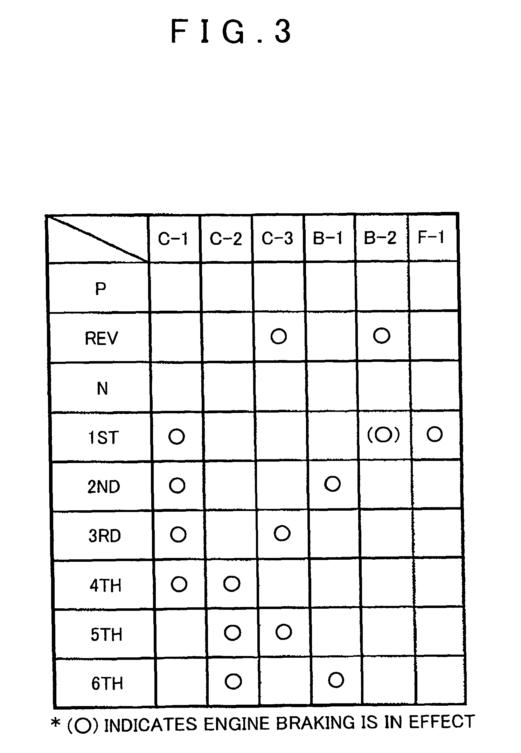

For example, in a first forward speed (1ST) of the Drive (D) range, the clutch C-1 and the one-way clutch F-1 are engaged, as shown in FIG. 3. In this state, as shown in FIGS. 2 and 4, the fixed sun gear S1 and the ring gear R1, which does the input rotation, cause the rotation of the carrier CR1, which does the deceleration rotation, to be input to the sun gear S3 through the clutch C-1. The rotation of the carrier CR2 is restricted to one direction (a forward rotation direction), that is, the carrier CR2 is in a fixed state in which reverse rotation is prevented. Thus, the deceleration rotation that is input to the sun gear S3 is output to the ring gear R2 through the fixed carrier CR2, and the forward rotation is output as the first forward speed from the counter gear 11.

Note that during engine braking (during coasting), the brake B-2 is engaged and the carrier CR2 is stationary, such that the first forward speed state is maintained in a form that prevents the forward rotation of the carrier CR2. Moreover, in the first forward speed, the reverse rotation of the carrier CR2 is prevented by the one-way clutch F-1, while the forward rotation is permitted, so the shift into the first forward speed, such as when a shift is made from the non-drive range to the drive range, for example, can be accomplished smoothly by the automatic engagement of the one-way clutch F-1.

In a second forward speed (2ND), the clutch C-1 is engaged, and the brake B-1 is engaged, as shown in FIG. 3. In this state, as shown in FIGS. 2 and 4, the sun gear S1, which is stationary, and the ring gear R1, which does the input rotation, cause the rotation of the carrier CR1, which does the deceleration rotation, to be input to the sun gear S3 through the clutch C-1. The engaging of the brake B-1 also makes the rotation of the sun gear S2 stationary. In this state, the deceleration rotation of the carrier CR2 becomes slower than that of the sun gear S3, such that the deceleration rotation that is input to the sun gear S3 is output through the carrier CR2 to the ring gear R2, and the forward rotation is output as the second forward speed from the counter gear 11.

Note that in a case where the speed change mechanism is in the second forward speed state and the clutch C-1 is released (into a slipping state) by a neutral control that is described later, forward rotation of the ring gear R2 is permitted by the one-way clutch F-1, which prevents the reverse rotation of the carrier CR2, such that backward movement of the vehicle (reverse rotation of the driving wheel) is prevented and what is called a hill hold state is implemented.

In a third forward speed (3TH), the clutch C-1 and the clutch C-3 are engaged, as shown in FIG. 3. In this state, as shown in FIGS. 2 and 4, the sun gear S1, which is stationary, and the ring gear R1, which does the input rotation, cause the rotation of the carrier CR1, which does the deceleration rotation, to be input to the sun gear S3 through the clutch C-1. The engaging of the clutch C-3 also causes the deceleration rotation of the carrier CR1 to be input to the sun gear S2. In other words, the deceleration rotation of the carrier CR1 is input to the sun gear S2 and the sun gear S3, so the planetary gear unit PU becomes directly coupled to the deceleration rotation. The deceleration rotation is thus output to the ring gear R2, and the forward rotation is output as the third forward speed from the counter gear 11.

In a fourth forward speed (4TH), the clutch C-1 and the clutch C-2 are engaged, as shown in FIG. 3. In this state, as shown in FIGS. 2 and 4, the sun gear S 1, which is stationary, and the ring gear R1, which does the input rotation, cause the rotation of the carrier CR1, which does the deceleration rotation, to be input to the sun gear S3 through the clutch C-1. The engaging of the clutch C-2 also causes the input rotation to be input to the carrier CR2. In this state, the deceleration rotation that is input to the sun gear S3 and the input rotation that is input to the carrier CR2 cause a deceleration rotation that is faster than that in the third forward speed to be output to the ring gear R2, and the forward rotation is output as the fourth forward speed from the counter gear 11.

In a fifth forward speed (5TH), the clutch C-2 and the clutch C-3 are engaged, as shown in FIG. 3. In this state, as shown in FIGS. 2 and 4, the sun gear S1, which is stationary, and the ring gear R1, which does the input rotation, cause the rotation of the carrier CR1, which does the deceleration rotation, to be input to the sun gear S2 through the clutch C-3. The engaging of the clutch C-2 also causes the input rotation to be input to the carrier CR2. In this state, the deceleration rotation that is input to the sun gear S2 and the input rotation that is input to the carrier CR2 cause an acceleration rotation that is slightly faster than the input rotation to be output to the ring gear R2, and the forward rotation is output as the fifth forward speed from the counter gear 11.

In a sixth forward speed (6TH), the clutch C-2 is engaged, and the brake B-1 is engaged, as shown in FIG. 3. In this state, as shown in FIGS. 2 and 4, the engaging of the clutch C-2 causes the input rotation to be input to the carrier CR2. The engaging of the brake B-1 also makes the rotation of the sun gear S2 stationary. Because the sun gear S2 is stationary in this state, the input rotation that is input to the carrier CR2 causes an acceleration rotation that is faster than that in the fifth forward speed to be output to the ring gear R2, and the forward rotation is output as the sixth forward speed from the counter gear 11.

In a first reverse speed (REV), the clutch C-3 is engaged, and the brake B-2 is engaged, as shown in FIG. 3. In this state, as shown in FIGS. 2 and 4, the sun gear S1, which is stationary, and the ring gear R1, which does the input rotation, cause the rotation of the carrier CR1, which does the deceleration rotation, to be input to the sun gear S2 through the clutch C-3. The engaging of the brake B-2 also makes the rotation of the carrier CR2 stationary. The deceleration rotation that is input to the sun gear S2 is thus output to the ring gear R2 through the stationary second carrier CR2, and the reverse rotation is output as the first reverse speed from the counter gear 11.

Note that in the Park (P) range and the Neutral (N) range, for example, the clutch C-1, the clutch C-2, and the clutch C-3 are released. In these states, the carrier CR1 is in a state of disconnection in relation to the sun gear S2 and the sun gear S3. That is, the planetary gear SP and the planetary gear unit PU are in a state of disconnection. Moreover, the input shaft 10 (an intermediate shaft 71) is in a state of disconnection in relation to the carrier CR2. Thus power transmission is in a state of disconnection between the input shaft 10 and the planetary gear unit PU. In other words, the power transmission is in a state of disconnection between the input shalt 10 and the counter gear 11.

Next, an automatic transmission control device 1 according to the present embodiment will be explained with reference to FIGS. 1 and 5 to 8.

As shown in FIG. 1, the automatic transmission control device 1 includes a control portion (ECU) 20 that is configured such that it is provided with road surface slope determination means 21, brake pedal force detection means 22, neutral control (hereinafter called "neutral control" and "N control") start determination means 23, N control end determination means 24, N control means 25, shift control means 30, and a shift map. The N control means 25 includes N control selection means 26, third speed N control means (intermediate speed neutral control means) 27, and second speed N control means (low speed neutral control means) 28.

Furthermore, an accelerator angle sensor 41 that detects an angle of an accelerator pedal not shown in the drawing, a brake sensor (brake pedal force detection means) 42 that detects an angle of a brake pedal (a foot brake) not shown in the drawing, an output revolution speed sensor 43 that detects the speed of the vehicle by detecting the revolution speed of the counter gear 11 that is coupled to the driving wheel, an oil temperature sensor (oil temperature detection means) 44 that detects an oil temperature within the automatic transmission 3, and a shift position sensor 45 that detects a selection position of a shift lever not shown in the drawing are connected to the control portion 20 and various types of signals are input to the control portion 20. The control portion 20 is also connected to the engine 2, and an idle signal that indicates that the engine 2 is in an idling state and an engine torque signal that is a value of the output torque of the engine 2 are input to the control portion 20. The output revolution speed sensor 43, instead of detecting the revolution speed of the counter gear 11, may be a sensor that detects one of a revolution speed of the countershaft (not shown in the drawing) and a revolution speed of an axle. Specifically, in a case where the output revolution speed sensor 43 is a sensor that detects one of the revolution speed of the counter gear 11 and the revolution speed of the countershaft, the speed of the vehicle can be computed based on the gear ratio of the differential gear unit, the gear ratio of the countershaft, or the like.

Based on the accelerator angle that is detected by the accelerator angle sensor 41 and the vehicle speed that is detected by the output revolution speed sensor 43, the shift control means 30 refers to the shift map, makes a selection from among the first to sixth forward speeds described above, and by electronically controlling a solenoid valve or the like of the hydraulic control device 6, controls the engaged and released states of the clutches C-1, C-2, C-3, B-1, and B-2 described above such that the transmission is shifted to the selected speed.

The road surface slope determination means 21, particularly while the vehicle is in motion, computes the running resistance of the vehicle based on the engine torque signal described above and the state of rotation (rotational acceleration) of the counter gear that is detected by the output revolution speed sensor 43. The road surface slope determination means 21 computes the slope of the road surface from time to time by comparing the computed running resistance to a pre-measured running resistance for the same vehicle on a flat road, for example. In a case where the oil temperature within the automatic transmission 3 that is detected by the oil temperature sensor 44 is a low oil temperature (for example, less than 15 degrees), the viscosity of the oil is high and the internal resistance within the automatic transmission 3 is great, which diminishes the reliability of the running resistance computation result, so the road surface slope determination means 21 suspends determination of the road surface slope in order to prevent an erroneous determination of the slope.

The brake pedal force detection means 22 detects a value of the brake pedal force based on the angle of the brake pedal (the amount that the brake pedal is depressed) that is detected by the brake sensor 42. When the brake pedal is depressed, the wheel brakes change the running resistance, so in the present embodiment, the road surface slope determination means 21 interrupts the determination of the road surface slope that it executes from time to time while the vehicle is in motion and retains as the value for the road surface slope the last value that was measured before the brake pedal was depressed. However, even in a state in which the brake pedal is depressed, the road surface slope determination means 21 may determine the road surface slope by correcting according to the brake pedal force.

Next, the neutral control according to the present invention will be explained with reference to FIGS. 1 and 5 to 8. For example, when the ignition (engine) is turned on, the control by the automatic transmission control device 1 is started (S1), and the N control start determination means 23 determines whether or not start conditions for N control have been fulfilled or not (S2).

For example, if the vehicle is stopped by depressing the foot brake while the shift position is in the drive range, such that the vehicle is stopped and waiting for a signal, if the N control start determination means 23 determines that all of the conditions below are fulfilled (YES at S2), the N control start determination, means 23 determines that N control will start (at time point t1 in FIG. 8) and issues a command to the N control means 25. The conditions are:
(1) The transmission is in the drive range (one of the D range or the R range), based on a signal from the shift position sensor 45.
(2) The idle signal is ON.
(3) The vehicle speed is zero (the vehicle is stopped), based on the detection by the output revolution speed sensor 43.
(4) The brake pedal force that is detected by the brake pedal force detection means 22 is equal to or more than a specified value Bp.

Having received the command, N control selection means 26 of the N control means 25 determines whether or not a sloping road condition and an oil temperature condition are fulfilled (S3). If the conditions are fulfilled (YES at S3), the N control selection means 26 selects a third speed N control by the third speed N control means 27 (S4), described later. If the conditions are not fulfilled (NO at S3), the N control selection means 26 selects a second speed N control by the second speed N control means 28 (S5).

That is, in a case where the road surface slope that is determined by the road surface slope determination means 21 is equal to or more than a specified slope (for example, equal to or more than a 15% slope), and in a case where the determination of the slope by the road surface slope determination means 21 is suspended because the oil temperature is low (less than 15 degrees), in other words, in a case where the vehicle is stopped on a sloping road and in a case where there is a possibility that the vehicle is stopped on a sloping road, because the road surface slope cannot be accurately determined, the vehicle is likely to move backward while the neutral control is in effect, even though the driver does not intend to move backward, so the sloping road condition and the oil temperature condition are deemed not to be fulfilled (NO at S3), and the processing proceeds to step S5, where the second speed N control is executed.

In the second speed N control, the second speed N control means 28 executes hydraulic control of the clutch C-1 and hydraulic control of the brake B-1, causing the clutch C-1 to slip, such that a roughly neutral state is implemented, and engaging the brake B-1. The neutral control is thus executed in the second speed state described above.

In detail, first, a release control is started at time point t1, as shown in FIG. 8, causing a hydraulic pressure PC1 of the clutch C-1 to drop. At the same time, a standby pressure output control is started that increases a hydraulic pressure PB1 of the brake B-1, and a backlash prevention operation is executed that tightens any slack in the brake band of the brake B-1 up to the level immediately prior to engagement. Next, at time point t2, an apply control of the hydraulic pressure PB1 of the brake B-1 is executed, increasing the hydraulic pressure PB1 and engaging the brake B-1. During this period, the release control for the clutch C-1 proceeds, such that the clutch C-1 starts to slip, and the revolution speed of the input shaft 10 is increased by being brought up to the idle speed of the engine 2 through the torque converter 4.

Next, at time point t3, when the hydraulic pressure PC1 of the clutch C-1 drops to a pressure equivalent to that when the clutch C-1 is in a state immediately prior to release (as well as immediately prior to engagement), the in-neutral control of the clutch C-1 is started. This maintains the neutral state immediately prior to release (as well as immediately prior to engagement) by, for example, increasing the hydraulic pressure PC1 of the clutch C-1 in small increments, and repeatedly decreasing the hydraulic pressure PC1 when minute changes occur in the revolution speed of the input shaft 10. Note that while the in-neutral control is in effect, the clutch C-1 slips such that a roughly neutral state is implemented, so the revolution speed of the input shaft 10 increases until it approaches the idle speed of the engine 2 by time point t4.

After the second speed N control has been started (after time point t1), the N control end determination means 24 determines from time to time whether or not any one of the following second speed N control end conditions has been fulfilled (S6). Specifically, the second speed N control end conditions are:
(a) The brake pedal force that is detected by the brake pedal force detection means 22 is less than the specified value Bp.
(b) Based on the detection by the output revolution speed sensor 43, the vehicle speed has become other than zero (the vehicle has started moving forward).
(c) The idle signal has turned OFF.
(d) A shift determination has been made by the shift control means 30.
If none of the conditions is fulfilled (NO at S6), the second speed N control is continued (S7). However, if even one of the conditions is fulfilled (YES at S6), the N control end determination means 24 issues a command to the second speed N control means 28, causing a second speed N control end control to start and ending the N control (S8).

The specified value Bp for the brake pedal force is modified based on the road surface slope that is determined by the road surface slope determination means 21, such that the value of Bp increases to the extent that the slope becomes steeper. That is, the specified value Bp is set to a value at which the foot brake can offset the force that the vehicle bears due to the slope of the road surface (the force that makes the vehicle move forward or back due to the force of gravity). In other words, if the brake pedal force were any less than the specified value Bp, the vehicle would start moving.

For example, at time point t5 in FIG. 8, if the driver eases the pressure on the foot brake such that the brake pedal force becomes less than the specified value Bp described above, the N control end determination means 24 determines that one of the second speed N control end conditions has been fulfilled. The second speed N control means 28, receiving that determination, starts an apply control that increases the hydraulic pressure PC1 of the clutch C-1, starting to re-engage the clutch C-1 and decreasing the hydraulic pressure PB1 of the brake B-1. Then, the second speed N control means 28 starts a revolution speed change standby control that causes the hydraulic pressure PB1 of the brake B-1 to sweep down in accordance with a change in the revolution speed of the input shaft 10. In other words, executing control such that the brake B-1 is released as the clutch C-1 is engaged brings about a transition from the hill hold force of the brake B-1 to the creep force of the clutch C-1 as the force that prevents the vehicle from moving backward.

Thereafter, advancing to time point t6, once the engaging of the clutch C-1 has advanced to a specified degree, the second speed N control means 28 shifts to a sweep control to reduce the hydraulic pressure PB1 of the brake B-1 to zero. At time point t7, the releasing of the brake B-1 is ended, and the re-engaging of the clutch C-1 is completed, such that the vehicle starts moving forward.

In the second speed N control state like that described above, the hill hold state is implemented by the brake B-1 working in coordination with the one-way clutch F-1 as described above, so the engaging of the brake B-1 is maintained until the clutch C-1 is re-engaged, even if, for example, the driver releases the foot brake while the vehicle is stopped on an upwardly sloping road (with a slope of 15% or more), such that the vehicle does not move backward. Thus the vehicle can be prevented from moving backward when the driver does not intend to move backward.

Next, the third speed N control that is the main feature of the present invention will be explained. At step S3, in a case where the oil temperature that is detected by the oil temperature sensor 44 described above is not a low temperature (is at least 15 degrees), where the determination of the slope by the road surface slope determination means 21 as described above is not suspended, and where the road surface slope that is determined by the road surface slope determination means 21 is less than a specified slope (for example, less than a 15% slope), that is, in a case where the vehicle is stopped on a roughly flat road, the vehicle is not likely to move forward or backward due to the slope of the road surface while the neutral control is in effect, so the sloping road condition and the oil temperature condition are fulfilled (YES at S3), so the processing advances to step S4, and the third speed N control is executed.

In the third speed N control, the third speed N control means 27 executes hydraulic control of the clutch C-1 and hydraulic control of the clutch C-3, causing the clutch C-1 to slip, such that a roughly neutral state is implemented, and engaging the clutch C-3. The neutral control is thus executed in the third speed state described above.

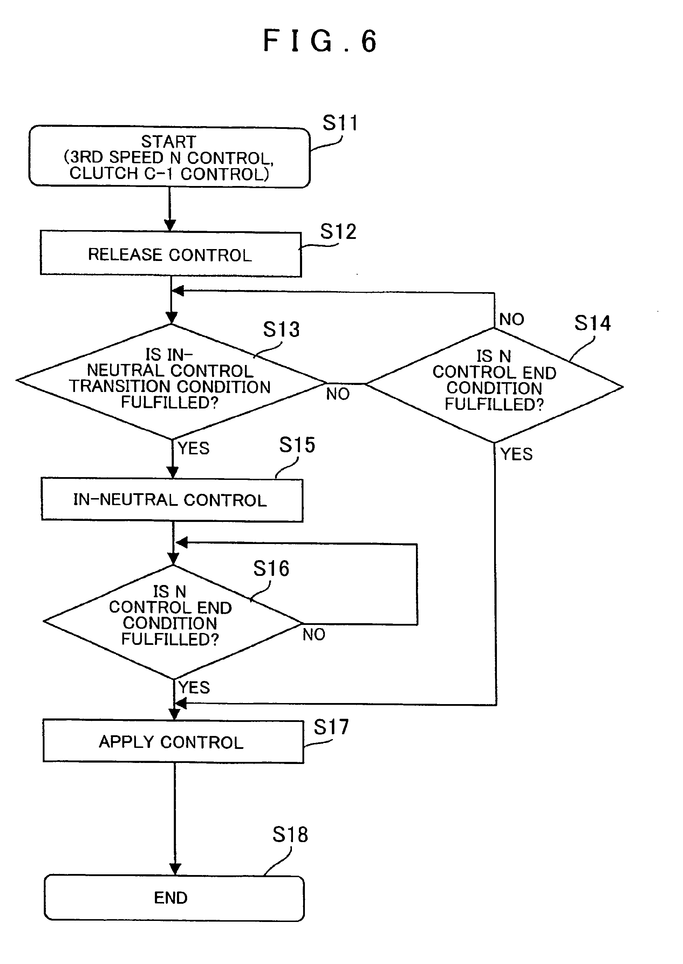

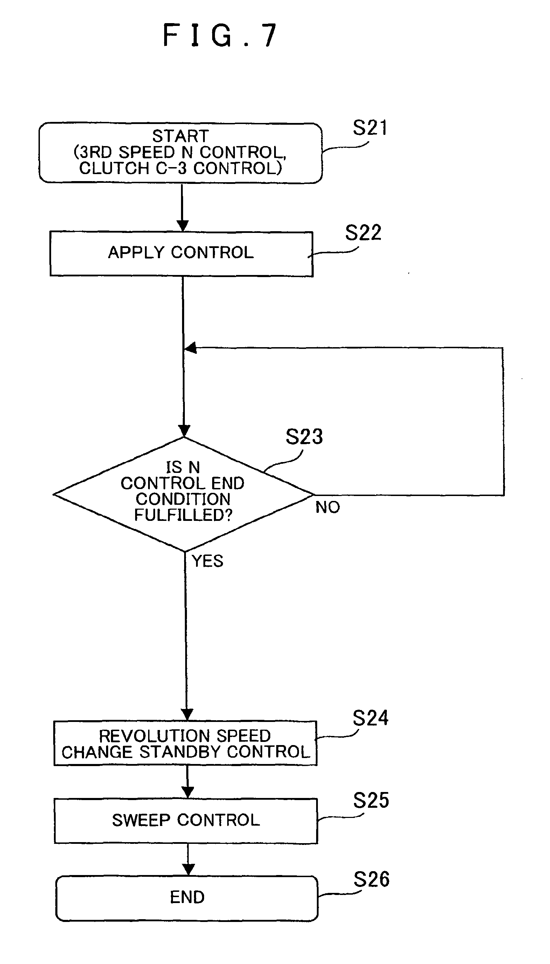

In detail, first, as shown in FIGS. 7 and 8, when a determination to start the N control has been made, an apply control is started at time point t1 that causes a hydraulic pressure PC3 of the clutch C-3 to increase up to an engagement pressure (S22), immediately putting the clutch C-3 into an engaged state. At the same time, as shown in FIGS. 6 and 8, a release control is started that causes the hydraulic pressure PC1 of the clutch C-1 to drop (S12). The release control continues until an in-neutral control transition condition such as a reaching of a specified state of progress of change in a revolution speed of an input shaft 11 or the like is fulfilled (NO at S13). Note that during this period, the N control end determination means 24 determines whether or not any one of the conditions (a) to (d) described above has been fulfilled (S14 in FIG. 6, S22 in FIG. 7). In a case where one of the conditions is fulfilled, the processing shifts to a third speed N control end control (S 17 in FIG. 6, S24 in FIG. 7) that is described later.

After the determination to start the N control has been made, even though the clutch C-3 is engaged immediately, the vehicle is in the stopped state and the driving wheel (the counter gear) is not turning, so no engagement shock occurs. Furthermore, engaging the clutch C-3 immediately causes the automatic speed change mechanism 5 to change from the first speed state to the third speed state, so the torque transmission path is changed. Changing the torque transmission path in this manner for the period from immediately before the end of the release control for the clutch C-1 through the period of the in-neutral control prevents the portion of the torque that is allocated to the clutch C-1 from being changed. Specifically, the release control is executed with a large portion of the torque allocated to the clutch C-1, then the portion of the torque that is allocated to the clutch C-1 decreases while the release control is in effect. After the clutch C-1 is completely released, the hydraulic pressure PC1 must be increased for the in-ncutral control (in order to maintain the slipping state), so it is possible to prevent the engagement shock from occurring due to the rc-engagement of the clutch C-1 in the slipping state.

Thereafter, at time point t3, for example, if the in-neutral control transition condition is fulfilled (YES at S13), as shown in FIGS. 6 and 8, the in-neutral control of the clutch C-1 is started (S15). In the third speed N control in the third speed state, only the clutches are in the engaged state, and the brake B-1 and the brake B2 are not used. Therefore, none of the various rotating parts (the planetary gear SP, the planetary gear unit PU, and the members that transmit rotation between them) is stationary in relation to a transmission case 9, and the idle vibration that is transmitted from the engine 2 through the torque converter 4, the input shaft 10, and the like is not transmitted to the transmission case 9 through the brakes. This makes it possible to reduce the idle vibration that is transmitted from the transmission case 9 to the vehicle body and the like.

Further, because the automatic speed change mechanism 5 is put into the third speed state, the reduction ratio is smaller in relation to the driving wheel than in the second speed state described above. In other words, the amplification ratio is smaller. Therefore, in the slipping state, the amplification ratio of the idle vibration (torque vibration) that is transmitted from the engine 2 through the slightly engaged clutch C-1 to the driving wheel is small. That is, it is possible to mitigate the idle vibration that is transmitted to the driving wheel.

On the other hand, even during the period of in-neutral control, the N control end determination means 24 determines whether or not any one of the conditions (a) to (d) described above has been fulfilled (S16 in FIG. 6, S22 in FIG. 7). For example, at time point t5 in FIG. 8, if the driver eases the pressure on the foot brake such that the brake pedal force becomes less than the specified value Bp described above, the N control end determination means 24 determines that one of the third speed N control end conditions has been fulfilled. As shown in FIG. 6, the third speed N control means 27, receiving that determination, starts an apply control that increases the hydraulic pressure PC1 of the clutch C-1 (S17), thus starting to re-engage the clutch C-1. As shown in FIG. 7, the third speed N control means 27 also starts a revolution speed change standby control that lowers the hydraulic pressure PC3 of the clutch C-3 and causes the hydraulic pressure PC3 of the clutch C-3 to sweep down in accordance with a change in the revolution speed of the input shaft 10 (S24). In other words, the third speed N control means 27 executes control such that the clutch C-3 is released as the clutch C-1 is engaged.

Note that, as described above, the specified value Bp for the brake pedal force is modified based on the road surface slope that is determined by the road surface slope determination means 21, such that the value of Bp increases to the extent that the slope becomes steeper. The hill hold function cannot be implemented as it occurs when the second speed N control is in effect, but the creep force can be implemented by the re-engaging of the clutch C-1 before the vehicle starts to move (backward) because the foot brake has been released. Therefore, even on a smooth sloping road with a slope of less than 15%, for example, the vehicle does not move backward when the driver does not intend to move backward.

Thereafter, advancing to time point t6 shown in FIG. 8, once the engaging of the clutch C-1 has advanced to a specified degree, the third speed N control means 27 shifts to a sweep control to reduce the hydraulic pressure PC3 of the clutch C-3 to zero, as shown in FIG 7 (S25). At time point t7, the releasing of the clutch C-3 is ended, and the re-engaging of the clutch C-1 is completed (S 18 in FIG. 6, S 26 in FIG. 7, S8 in FIG. 5), such that the vehicle starts moving forward.

As explained above, when the vehicle is stopped with the transmission in the drive range, the automatic transmission control device 1 according to the present invention decreases the hydraulic pressure PC1 of the clutch C-1 that is engaged by the hydraulic control device 6 when the vehicle starts to move forward. This starts the neutral control that puts the clutch C-1 into the slipping state and decreases the torque that is transmitted between the input shaft 10 and the counter gear 11. The third speed N control means 27 increases the hydraulic pressure PC3 of the clutch C-3 to engage the clutch C-3 and implement the third speed state. Therefore, the rotating parts of the automatic speed change mechanism 5 are not made stationary in relation to the transmission case 9 by the brakes B-1, B2 and the like, making it possible to prevent the idle vibration of the engine from being transmitted to the transmission case 9 through the automatic speed change mechanism 5 and making it possible to reduce the vehicle vibration while the neutral control is in effect. Moreover, because the automatic speed change mechanism 5 is in the third speed state, in which the gear ratio is higher than in the second speed, it is possible to mitigate the extent to which the idle vibration is amplified according to the gear ratio and transmitted to the driving wheel, making it possible to reduce the vehicle vibration while the neutral control is in effect.

Furthermore, because the third speed N control means 27 implements the third speed state when the road surface slope is less than the specified slope, the third speed N control, which does not implement the hill hold state, is executed only when the road surface slope is less than the specified slope. This makes it possible to prevent the vehicle from moving backward when the driver does not intend to move backward while the neutral control is in effect.

Additionally, because the second speed N control means 28 implements the hill hold state in the second speed when the road surface slope is equal to or more than the specified slope, the hill hold state is implemented when the road surface slope is equal to or more than the specified slope, making it possible to prevent the vehicle from moving backward when the driver does not intend to move backward while the neutral control is in effect.

In a case where the road surface slope determination means 21 has determined that the oil temperature that is detected by the oil temperature sensor 44 is a low oil temperature, the determination of the road surface slope is suspended. When the determination of the road surface slope is suspended, the second speed N control means 28 implements the hill hold state in the second speed. It is therefore possible to prevent an erroneous determination of the slope, caused by the high viscosity of the oil and the large rotational resistance of the automatic speed change mechanism 5 at the low oil temperature. This in turn makes it possible to prevent an erroneous determination from causing the vehicle to move backward when the driver does not intend to move backward while the neutral control is in effect.

When the N control start determination means 23 has determined that the transmission is in the drive range, that the foot brake pedal force is equal to or more than the specified value Bp, and that the vehicle is in the stopped state (the vehicle speed is zero), the N control start determination means 23 determines that the N control means 25 will start executing the neutral control. When the N control end determination means 24 has determined that the foot brake pedal force has become less than the specified value Bp, the N control end determination means 24 determines that the N control means 25 will end the execution of the neutral control. It is therefore possible for the driver's intention to stop the vehicle to be reliably determined and for the neutral control to be executed, without the driver performing any deceleration control, for example, while the vehicle is being moved forward by the creep force.

The specified value Bp for the foot brake pedal force is modified based on the road surface slope that is determined by the road surface slope determination means 21, so the start and end timings for the neutral control can be varied according to the road surface slope. In particular, ending the neutral control sooner as the road surface slope becomes steeper makes it possible to start transmitting the torque to the driving wheel sooner, making it possible to prevent the vehicle from moving backward when the driver does not intend to move backward.

For example, if the clutch C-3 is engaged while the release of the clutch C-1 (in-neutral control) from the first speed state is in progress, the shift is made from the first speed to the third speed while the clutch C-1 is being released. This changes the portion of the torque that is allocated to the clutch C-1 and changes the state of engagement of the clutch C-1 (releases and re-engages the clutch C-1), making it likely that a torque fluctuation shock will occur. However, when the hydraulic pressure PC3 of the clutch C-3 is increased and the clutch C-3 is engaged, the third speed N control means 27 immediately increases the hydraulic pressure PC3 to more than the engagement pressure. It is therefore possible to execute release control that releases the clutch C-1 from the state of being shifted into the third speed, making it possible to prevent the torque fluctuation shock from occurring.

Note that in the present embodiment explained above, the automatic transmission control device that was explained implements the third speed state by controlling the slipping of the clutch C-1 and engaging the clutch C-3, but the present invention can be applied in the same manner using an automatic transmission that implements the fourth speed state by engaging the clutch C-2 instead of the clutch C-3. Further, in the present embodiment, the automatic transmission that was explained can implement six forward speeds, but the present invention is not limited to this example and can be applied to an automatic transmission that implements multiple speeds, as long as it has a clutch that implements a speed at least as high as the intermediate speed and that engages at the same time as the clutch C-1 that engages when the vehicle starts moving forward.

In the present embodiment, the automatic transmission control device that was explained executes the neutral control when the transmission is the speed (the second speed) state that implements the hill hold function when the road surface slope is equal to or more than a specified slope or when it is difficult to determine the road surface slope. However, the present invention is not limited to this example and can be configured such that the neutral control is not executed when it is likely that the vehicle will move backward when the driver does not intend to move backward. In this case, it is obviously sufficient for the control portion to be provided with only the intermediate speed neutral control means that controls the engagement of a second clutch.

In the present embodiment, the automatic transmission control device that was explained determines the road surface slope based on the running resistance, but the present invention is not limited to this example. For example, an inclinometer or the like may be used. In other words, any device may be used as long as it can determine the road surface slope.

In the present embodiment, when the road surface slope is less than a specified slope, the neutral control that is executed engages only the clutches that do not implement the hill hold. For example, in a vehicle that is capable of implementing the hill hold by controlling the foot brake, a side brake, or the like, the neutral control, in all of its forms, can be such that it engages only the clutches, irrespective of the road surface slope.

In the present embodiment, the automatic transmission control device that was explained uses the output revolution speed sensor 43 to determine whether the vehicle is stopped. However, particularly in a case where the rotating parts of the speed change mechanism rotate freely in relation to the transmission case, as they do in the third speed N control, the revolution speed sensor is likely to make an erroneous determination, so a wheel revolution speed sensor such as an ABS or the like may also be used.

In the present embodiment, the portion of the torque that is allocated to the clutch C-1 is prevented from changing by increasing the hydraulic pressure PC3 of the clutch C-3 up to the engagement pressure immediately prior to starting the third speed N control. However, in order to reliably prevent the change in the torque allocation, the automatic transmission control device may lean the release timing for the clutch C-1 based on the engagement timing for the clutch C-3, and the clutch C-1 may be released immediately after the clutch C-3 is engaged.

### INDUSTRIAL APPLICABILITY

The automatic transmission control device according to the present invention can be used for an automatic transmission that is installed in a passenger car, a truck, a bus, agricultural machinery, or the like, and it is particularly preferable for use in an automatic transmission that is capable of executing the neutral control and for which a reduction in vehicle vibration is required.

## Claims

1. An automatic transmission control device (1) for an automatic transmission (3), the automatic transmission (3) including
a plurality of friction engagement elements (C-1, C-2, C-3, B-1, B-2, F-1) that includes at least a first clutch (C-1) that is engaged when forward movement starts, a brake (B-1) that is engaged in addition to the first clutch (C-1) in a low speed, and a second clutch (C-3) that is engaged in addition to the first clutch (C-1) in an intermediate speed that has a higher gear ratio than the low speed,
a speed change mechanism (5) that implements a plurality of speeds by forming a transmission path between an input member (10) and an output member (11), based on an engagement state of the plurality of friction engagement elements (C-1, C-2, C-3, B-1, B-2, F-1), and
a hydraulic control device (6) that performs pressure regulation of a hydraulic pressure that is supplied to a hydraulic servo for each of the plurality of friction engagement elements (C-1, C-2, C-3, B-1, B-2, F-1),
the automatic transmission control device (1) comprising:
neutral control means (25) for executing a neutral control that, when a vehicle is stopped with the automatic transmission (3) in a drive range, causes the hydraulic control device (6) to decrease a hydraulic pressure (PC1) of the first clutch (C-1), putting the first clutch (C-1) into a slipping state, and decreases torque that is transmitted between the input member (10) and the output member (11),
wherein
the neutral control means (25) includes intermediate speed neutral control means (27) for, during execution of the neutral control, increasing a hydraulic pressure (PC3) of the second clutch (C-3), engaging the second clutch (C-3) and putting the automatic transmission (3) into the intermediate speed.

2. The automatic transmission control device (1) according to claim 1, **characterized by** further comprising:
road surface slope determination means (21) for determining a road surface slope,
wherein
the intermediate speed neutral control means (27) puts the automatic transmission (3) into the intermediate speed when the road surface slope is less than a specified slope.

3. The automatic transmission control device (1) according to claim 2, **characterized in that**:
the neutral control means (25) includes low speed neutral control means (28) for, during execution of the neutral control, increasing a hydraulic pressure (PB1) of the brake (B-1), engaging the brake (B-1), putting the automatic transmission (3) into the low speed, and implementing a hill hold state, and
the low speed neutral control means (28) puts the automatic transmission (3) into the low speed and implements the hill hold state when the road surface slope is equal to or more than the specified slope.

4. The automatic transmission control device (1) according to claim 3, **characterized by** further comprising:
oil temperature detection means (44) for detecting an oil temperature within the automatic transmission (3),
wherein
the road surface slope determination means (21) suspends the determination of the road surface slope when it determines that the oil temperature that is detected by the oil temperature detection means (44) is a low oil temperature, and
the low speed neutral control means (28) puts the automatic transmission (3) into the low speed and implements the hill hold state when the determination of the road surface slope is suspended.

5. The automatic transmission control device (1) according to any one of claims 2 to 4, **characterized in that**:
the road surface slope determination means (21) computes a running resistance based on an engine output and a rotational state of the output member (11) and determines the road surface slope based on the running resistance.

6. The automatic transmission control device (1) according to any one of claims 2 to 5, **characterized by** further comprising:
brake pedal force detection means (22, 42) for detecting a foot brake pedal force;
neutral control start determination means (23) for, when it determines that the automatic transmission (3) is in the drive range, that the foot brake pedal force is equal to or more than a specified value (Bp), and that the vehicle is in a stopped state, determining that the execution of the neutral control will be started by the neutral control means (25); and
neutral control end determination means (24) for, when it determines that the automatic transmission (3) is in the drive range and that the foot brake pedal force has become less than the specified value (Bp), determining that the execution of the neutral control will be ended by the neutral control means (25).

7. The automatic transmission control device (1) according to claim 6, **characterized in that**:
the specified value (Bp) is modified based on the road surface slope that is determined by the road surface slope determination means (21).

8. The automatic transmission control device (1) according to any one of claims 1 to 7, **characterized in that**:
the intermediate speed neutral control means (27), when it increases the hydraulic pressure (PC3) of the second clutch (C-3) and engages the second clutch (C-3), immediately increases the hydraulic pressure (PC3) of the second clutch (C-3) to more than an engagement pressure.

## Patentansprüche

1. Automatikgetriebe-Steuervorrichtung (1) für ein Automatikgetriebe (3),
wobei das Automatikgetriebe (3) aufweist:
mehrere Reibungseingriffselemente (C-1, C-2, C-3, B-1, B-2, F-1), welche eine erste Kupplung (C-1), die im Eingriff ist, wenn eine Vorwärtsbewegung beginnt, eine Bremse (B-1), die zusätzlich zu der ersten Kupplung (C-1) in einem niedrigen Gang in Eingriff ist, und eine zweite Kupplung (C-3), die zusätzlich zu der ersten Kupplung (C-1) in einem Zwischengang in Eingriff ist, welcher ein höheres Übersetzungsverhältnis als der niedrige Gang hat, aufweisen,
einen Gangänderungsmechanismus (5), welcher mehrere Gänge implementiert, indem er einen Übertragungsweg zwischen einem Eingangselement (10) und einem Ausgangselement (11) bildet, auf der Basis eines Eingriffszustands der mehreren Reibungseingriffselemente (C-1, C-2, C-3, B-1, B-2, F-1), und
eine hydraulische Steuervorrichtung (6), welche eine Druckregelung eines hydraulischen Druckes, welcher einem hydraulischen Servo zugeführt wird, für jedes der mehreren Reibungseingriffselemente (C-1, C-2, C-3, B-1, B-2, F-1) durchführt,
wobei die Automatikgetriebe-Steuervorrichtung (1) umfaßt:
Neutralsteuerungsmittel (25) zum Durchführen einer Neutralsteuerung, die, wenn ein Fahrzeug mit dem Automatikgetriebe (3) in einem Fahrbereich angehalten wird, bewirkt, daß die hydraulische Steuervorrichtung (6) einen hydraulischen Druck (PC1) der ersten Kupplung (C-1) verringert, indem sie die erste Kupplung (C-1) in einen Schlupfzustand versetzt, und das Drehmoment verringert, welches zwischen dem Eingangselement (10) und dem Ausgangselement (11) übertragen wird,
wobei
das Neutralsteuerungsmittel (25) Zwischengang-Neutralsteuerungsmittel (27) aufweist, um während der Durchführung der Neutralsteuerung einen hydraulischen Druck (PC3) der zweiten Kupplung (C-3) zu erhöhen, die zweite Kupplung (C-3) einzurücken und das Automatikgetriebe (3) in den Zwischengang zu schalten.

2. Automatikgetriebe-Steuervorrichtung (1) nach Anspruch 1, **dadurch gekennzeichnet, daß** sie ferner umfaßt:
Fahrbahnneigungs-Bestimmungsmittel (21) zum Bestimmen einer Fahrbahnneigung,
wobei
das Zwischengang-Neutralsteuerungsmittel (27) das Automatikgetriebe (3) in den Zwischengang schaltet, wenn die Fahrbahnneigung kleiner als eine vorgegebene Neigung ist.

3. Automatikgetriebe-Steuervorrichtung (1) nach Anspruch 2, **dadurch gekennzeichnet, daß**:
das Neutralsteuerungsmittel (25) Niedriggang-Neutralsteuerungsmittel (28) aufweist, um während der Durchführung der Neutralsteuerung einen hydraulischen Druck (PB1) der Bremse (B-1) zu erhöhen, die Bremse (B-1) in Eingriff zu bringen, das Automatikgetriebe (3) in den niedrigen Gang zu schalten und einen Berghaltezustand zu implementieren, und
das Niedriggang-Neutralsteuerungsmittel (28) das Automatikgetriebe (3) in den niedrigen Gang schaltet und den Berghaltezustand implementiert, wenn die Fahrbahnneigung gleich der oder größer als die vorgegebene Neigung ist.

4. Automatikgetriebe-Steuervorrichtung (1) nach Anspruch 3, **dadurch gekennzeichnet, daß** sie ferner umfaßt:
Öltemperatur-Detektionsmittel (44) zum Detektieren einer Öltemperatur innerhalb des Automatikgetriebes (3),
wobei
das Fahrbahnneigungs-Bestimmungsmittel (21) die Bestimmung der Fahrbahnneigung zeitweilig einstellt, wenn es bestimmt, daß die Öltemperatur, welche von dem Öltemperatur-Detektionsmittel (44) detektiert wird, eine niedrige Öltemperatur ist, und
das Niedriggang-Neutralsteuerungsmittel (28) das Automatikgetriebe (3) in den niedrigen Gang schaltet und den Berghaltezustand implementiert, wenn die Bestimmung der Fahrbahnneigung zeitweilig eingestellt wird.

5. Automatikgetriebe-Steuervorrichtung (1) nach einem der Ansprüche 2 bis 4, **dadurch gekennzeichnet, daß**:
das Fahrbahnneigungs-Bestimmungsmittel (21) einen Fahrwiderstand auf der Basis einer Motorleistung und eines Rotationszustands des Ausgangselements (11) berechnet und die Fahrbahnneigung auf der Basis des Fahrwiderstands bestimmt.

6. Automatikgetriebe-Steuervorrichtung (1) nach einem der Ansprüche 2 bis 5, **dadurch gekennzeichnet, daß** es ferner umfaßt:
Bremspedalkraft-Detektionsmittel (22, 42) zum Detektieren einer Fußbremspedalkraft,
ein Neutralsteuerungsstart-Bestimmungsmittel (23), um, wenn es bestimmt, daß das Automatikgetriebe (3) sich im Fahrbereich befindet, daß die Fußbremspedalkraft gleich einem oder größer als ein vorgegebener Wert (Bp) ist und daß das Fahrzeug sich in einem angehaltenen Zustand befindet, zu bestimmen, daß die Ausführung der Neutralsteuerung von dem Neutralsteuerungsmittel (25) gestartet wird, und
ein Neutralsteuerungsende-Bestimmungsmittel (24), um, wenn es bestimmt, daß das Automatikgetriebe (3) sich im Fahrbereich befindet und daß die Fußbremspedalkraft kleiner als der vorgegebene Wert (Bp) geworden ist, zu bestimmen, daß die Ausführung der Neutralsteuerung von dem Neutralsteuerungsmittel (25) beendet wird.

7. Automatikgetriebe-Steuervorrichtung (1) nach Anspruch 6, **dadurch gekennzeichnet, daß**:
der vorgegebene Wert (Bp) auf der Basis der Fahrbahnneigung, welche von dem Fahrbahnneigungs-Bestimmungsmittel (21) bestimmt wird, geändert wird.

8. Automatikgetriebe-Steuervorrichtung (1) nach einem der Ansprüche 1 bis 7, **dadurch gekennzeichnet, daß**:
das Zwischengang-Neutralsteuerungsmittel (27), wenn es den hydraulischen Druck (PC3) der zweiten Kupplung (C-3) erhöht und die zweite Kupplung (C-3) einrückt, sofort den hydraulischen Druck (PC3) der zweiten Kupplung (C-3) auf mehr als einen Einrückdruck erhöht.

## Revendications

1. Dispositif de commande de transmission automatique (1) pour une transmission automatique (3), la transmission automatique (3) comprenant
une pluralité d'éléments d'engagement à friction (C-1, C-2, C-3, B-1, B-2, F-1) comprenant au moins un premier embrayage (C-1) qui est engagé quand un mouvement en marche avant commence, un frein (B-1) qui est engagé en plus du premier embrayage (C-1) à une faible vitesse, et un deuxième embrayage (C-3) qui est engagé en plus du premier embrayage (C-1) dans une vitesse intermédiaire qui a un rapport de transmission plus élevé que la faible vitesse,
un mécanisme de changement de vitesse (5) qui met en oeuvre une pluralité de vitesses en formant un passage de transmission entre un élément d'entrée (10) et un élément de sortie (11), sur la base d'un état d'engagement de la pluralité d'éléments d'engagement à friction (C-1, C-2, C-3, B-1, B-2, F-1), et
un dispositif de commande hydraulique (6) qui réalise une régulation de pression d'une pression hydraulique qui est délivrée à un servo hydraulique pour chaque élément de la pluralité d'éléments d'engagement à friction (C-1, C-2, C-3, B-1, B-2, F-1),
le dispositif de commande de transmission automatique (1) comportant :
des moyens de commande de point mort (25) destinés à exécuter une commande de point mort qui, quand le véhicule est arrêté avec la transmission automatique (3) dans une gamme d'entraînement, amènent le dispositif de commande hydraulique (6) à diminuer une pression hydraulique (PC1) du premier embrayage (C-1), en mettant le premier embrayage (C-1) dans un état de glissement, et diminuent un couple qui est transmis entre l'élément d'entrée (10) et l'élément de sortie (11),
les moyens de commande de point mort (25) comprenant des moyens de commande de point mort de vitesse intermédiaire (27) destinés, pendant l'exécution de la commande de point mort, à augmenter une pression hydraulique (PC3) du deuxième embrayage (C-3), en engageant le deuxième embrayage (C-3) et en mettant la transmission automatique (3) dans la vitesse intermédiaire.

2. Dispositif de commande de transmission automatique (1) selon la revendication 1, **caractérisé en ce qu'**il comporte en outre :
des moyens de détermination de pente de surface de route (21) destinés à déterminer une pente de surface de route,
les moyens de commande de point mort de vitesse intermédiaire (27) mettant la transmission automatique (3) dans la vitesse intermédiaire quand la pente de surface de route est inférieure à une pente spécifiée.

3. Dispositif de commande de transmission automatique (1) selon la revendication 2, **caractérisé en ce que** :
les moyens de commande de point mort (25) comprennent des moyens de commande de point mort à faible vitesse (28) destinés, pendant l'exécution de la commande de point mort, à augmenter une pression hydraulique (PB1) du frein (B-1), en engageant le frein (B-1), en mettant la transmission automatique (3) dans la faible vitesse, et en mettant en oeuvre un état de retenue en côte, et
les moyens de commande de point mort à faible vitesse (28) mettent la transmission automatique (3) dans la faible vitesse et mettent en oeuvre l'état de retenue en côte quand la pente de surface de route est égale ou supérieure à la pente spécifiée.

4. Dispositif de commande de transmission automatique (1) selon la revendication 3, **caractérisé en ce qu'**il comporte en outre :
des moyens de détection de température d'huile (44) destinés à détecter une température d'huile dans la transmission automatique (3),
les moyens de détermination de pente de surface de route (21) suspendant la détermination de la pente de surface de route lorsqu'ils déterminent que la température d'huile qui est détectée par les moyens de détection de température d'huile (44) est une température d'huile basse, et
les moyens de commande de point mort à faible vitesse (28) mettant la transmission automatique (3) dans la faible vitesse et mettant en oeuvre l'état de retenue en côte quand la détermination de la pente de surface de route est suspendue.

5. Dispositif de commande de transmission automatique (1) selon l'une quelconque des revendications 2 à 4, **caractérisé en ce que** :
les moyens de détermination de pente de surface de route (21) calculent une résistance au déplacement sur la base d'une sortie de moteur et d'un état de rotation de l'élément de sortie (11) et déterminent la pente de surface de route sur la base de la résistance au déplacement.

6. Dispositif de commande de transmission automatique (1) selon l'une quelconque des revendications 2 à 5, **caractérisé en ce qu'**il comporte en outre :
des moyens de détection de force de pédale de frein (22, 42) destinés à détecter une force de pédale de frein ;
des moyens de détermination de début de commande de point mort (23) destinés, lorsqu'ils déterminent que la transmission automatique (3) est dans la gamme d'entraînement, que la force de pédale de frein est égale ou supérieure à une valeur spécifiée (Bp), et que le véhicule est dans un état arrêté, à déterminer que l'exécution de la commande de point mort va être commencée par les moyens de commande de point mort (25) ; et
des moyens de détermination de fin de commande de point mort (24) destinés, lorsqu'ils déterminent que la transmission automatique (3) est dans la gamme d'entraînement et que la force de pédale de frein est devenue inférieure à la valeur spécifiée (Bp), à déterminer que l'exécution de la commande de point mort va être terminée par les moyens de commande de point mort (25).

7. Dispositif de commande de transmission automatique (1) selon la revendication 6, **caractérisé en ce que** :
la valeur spécifiée (Bp) est modifiée sur la base de la pente de surface de route qui est déterminée par les moyens de détermination de pente de surface de route (21).

8. Dispositif de commande de transmission automatique (1) selon l'une quelconque des revendications 1 à 7, **caractérisé en ce que** :
les moyens de commande de point mort de vitesse intermédiaire (27), lorsqu'ils augmentent la pression hydraulique (PC3) du deuxième embrayage (C-3) et engagent le deuxième embrayage (C-3), augmentent immédiatement la pression hydraulique (PC3) du deuxième embrayage (C-3) à plus qu'une pression d'engagement.
